# EUROPÄISCHE PATENTSCHRIFT

(11) **EP 3 683 481 B1**
(45) Veröffentlichungstag und Bekanntmachung des Hinweises auf die Patenterteilung: **03.03.2021**
(21) Anmeldenummer: 19217158.5
(22) Anmeldetag: 17.12.2019
(51) Int. Cl.: F16L 15/02, F16L 15/06, F16L 23/02, F16L 27/12, F16L 47/14

(54) **PASS- UND AUSBAUSTÜCK FÜR ROHRLEITUNGEN**
FITTING AND EXTENSION PIECE FOR PIPELINES
RACCORD ET PIÈCE D'EXTENSION POUR CONDUITES

(30) Priorität: 15.01.2019 DE 102019100897
(43) Veröffentlichungstag der Anmeldung: 22.07.2020
(73) Patentinhaber: Reinert - Ritz GmbH, 48531 Nordhorn (DE)
(72) Erfinder: Rothe, Michael, 49846 Hoogstede (DE); Schlump, Winfried, 49835 Wietmarschen (DE)
(74) Vertreter: Ostriga Sonnet Wirths & Vorwerk

(56) Entgegenhaltungen:
- EP-A1- 3 441 656
- EP-A2- 0 909 914
- DE-C- 884 256
- DE-C- 929 404
- US-A1- 2002 070 547

## Beschreibung

Die Erfindung betrifft ein Pass- und Ausbaustück für Rohrleitungen, insbesondere zur Anordnung zwischen einer Rohrleitung und einer Armatur, mit einem ersten Rohrstück und einem zweiten Rohrstück, wobei das zweite Rohrstück in dem ersten Rohrstück axial verschieblich angeordnet ist, um eine axiale Längenänderung des Pass- und Ausbaustückes zu ermöglichen, und wobei das erste und das zweite Rohrstück an ihren voneinander abgewandten Enden je eine Befestigungseinrichtung aufweisen, die als Befestigungsflansch und/oder als Rohrspitzende ausgebildet sein kann.

Solche Pass- und Ausbaustücke sind aus dem druckschriftlich nicht belegbaren Stand der Technik hinlänglich bekannt. Sie zeichnen sich dadurch aus, dass die Rohrstücke teleskopartig verlagerbar aneinander angeordnet sind. Die Teleskopierbarkeit der Rohrstücke ermöglicht es den erforderlichen Axialraum für den Ein- und Ausbau von Armaturen, Revisionsschächten oder sonstigen Bauteilen in Rohrleitungen zur Verfügung zu stellen.

Solche Pass- und Ausbaustücke bestehen aus einem ersten Rohrstück mit an beiden Enden angeordneten Flanschen und einem zweiten Rohrstück, welches mit einem Ende in dem ersten Rohrstück verschieblich gelagert ist. An seinem zweiten Ende bildet das zweite Rohrstück einen weiteren Flansch aus. Die drei axial hintereinander angeordneten Flansche sind mittels mehrerer Gewindestangen miteinander verbunden und mit mehreren Sicherungsmuttern aneinander gesichert.

Nach einem Lösen der Sicherungsmuttern erfolgt die axiale Längenveränderung des Pass- und Ausbaustücks über auf den Gewindestangen sitzenden Stellmuttern.

Derartige Pass- und Ausbaustücke haben sich im Einsatz bewährt, sind aber in Bezug auf die Handhabung verbesserungswürdig.

Ein alternatives Pass- und Ausbaustück ist beispielsweise in EPO 909 914 A2 offenbart. Dort sind zwei ineinander angeordnete Rohrstücke mit zusammenwirkenden Innen- beziehungsweise Außengewinde versehen, so dass eine relative Drehung der Rohrstücke zueinander das Pass- und Ausbaustück in seiner Länge verändern.

Aufgabe der Erfindung ist es, ein Pass- und Ausbaustück zu schaffen, welches eine optimierte Handhabung gewährleistet.

Gelöst wird die Aufgabe von einem Pass- und Ausbaustück für Rohrleitungen mit den Merkmalen des Anspruches 1, insbesondere mit dessen kennzeichnenden Merkmalen, wonach das Gewinde des Pass- und Ausbaustücks ein Axialspiel aufweist und in einer definierten Gewindestellung eine axiale Verlagerung von dem ersten und dem zweiten Rohrstück gewährleistet und dass das Maß des Axialspiels wenigstens einer abdichtenden Stauchung eines Dichtelements zwischen der als Befestigungsflansch ausgebildeten Befestigungseinrichtung des zweiten Rohrstücks und einer Flanschanlagefläche eines weiteren Bauteils, wie Armatur oder Rohr, entspricht.

Ein Vorteil der Erfindung liegt darin, dass die beiden Gewinde der Rohrstücke zusammenwirken und lediglich eine relative Drehung der beiden Rohrstücke zueinander erforderlich ist, um das Pass- und Ausbaustückes in seiner Länge zu verstellen. Durch die relative Drehung der Rohrstücke lässt sich die axiale Längenveränderung nicht nur einfacher, sondern auch wesentlich schneller herstellen. Der Anwender muss lediglich das zweite Rohrstück aus dem ersten Rohrstück herausdrehen. Das aufwendige Verstellen mittels einer Vielzahl an Stellmuttern auf einer Vielzahl an Gewindestangenentfällt. Lediglich für die Verbindung der Befestigungsflansche am jeweiligen Gegenbauteil werden in gewohnter Weise Schraubbolzen eingesetzt.

Der wesentliche Vorteil der kennzeichnenden Merkmale des Anspruchs 1 liegt jedoch im Folgenden: Bei der Montage des Pass- und Ausbaustücks wird zunächst der Befestigungsflansch des ersten Rohrstücks an einem Gegenbauteil festgelegt und anschließend lediglich das zweite Rohrstück bis zum Anschlag seines Befestigungsflansches an einer Flanschanlagefläche eines weiteren Bauteils, beispielsweise Armatur, aus dem ersten Rohrstück herausgeschraubt. Zur Abdichtung der Rohrleitung ist zwischen dem Befestigungsflansch vom Pass- und Ausbaustück und dem Gegenbauteil ein Dichtelement eingefügt. Dieses muss zur Abdichtung ausreichend gestaucht werden. Es ist zwar möglich das zweite Rohrstück hierzu weiter aus dem ersten Rohrstück herauszudrehen. Die dabei zwischen Befestigungsflansch und Dichtelement entstehenden Reibkräfte sind problematisch. Um diesem Problem zu begegnen, schlägt die Erfindung das Axialspiel des Gewindes im Pass- und Ausbaustück vor. Hierdurch lässt sich das zweite Rohrstück bei der Befestigung am Gegenbauteil in axialer Richtung ohne Drehung verlagern. Bei dieser Verlagerung wird das Dichtelement gestaucht und die Flanschanlagefläche des Befestigungsflansches und die Flanschanlagefläche des Gegenstücks aneinandergelegt. Die axiale Verlagerung wird durch das Festziehen von Schraubbolzen an dem zweiten Befestigungsflansch und dem Gegenbauteil ausgelöst.

Sind die Befestigungseinrichtungen als Befestigungsflansche ausgebildet, wird das erfindungsgemäße Pass- und Ausbaustück in gewohnter Weise mittels Schraubverbindungen in die die Rohrleitung eingebaut. Ist eine der Befestigungseinrichtung als Rohrspitzende ausgebildet, bietet sich eine Schweißverbindung, z.B. mittels Heizelement-Stumpfschweißen an.

Vorgesehen ist darüber hinaus, dass der Befestigungsflansch des einen Rohrstücks als Festflansch und der Befestigungsflansch des anderen Rohrstücks als Losflansch ausgebildet ist. Besonders vorteilhaft daran ist, dass der Festflansch einfach mittels Schraubbolzen an einer Armatur oder einem Rohr befestigbar ist. Das andere Rohrstück ist vorteilhafterweise als Losflansch ausgebildet, wodurch das zweite Rohrstück bis zur Flanschanlagefläche des weiteren Bauteils herausgedreht werden kann. Anschließend können die Bohrungen des Losflansches fluchtend zu den Bohrungen eines Flansches des weiteren Bauteiles positioniert werden, um die Bauteile fest aneinander anzuordnen.

Es ist allerdings denkbar, dass beide Befestigungsflansche als Losflansch ausgebildet sind.

Statt des Festflansches kann das eine Rohrstück lediglich ein Rohrspitzende aufweisen, mittels dessen es in der Rohrleitung befestigt wird. Dies kann beispielsweise mittels Heizelement-Stumpfschweißen erfolgen.

In einer weiteren Ausführungsform des Pass- und Ausbaustücks ist es vorgesehen, dass
- die Innenumfangsfläche des ersten Rohrstücks einen gewindefreien Abschnitt aufweist,
- die Außenumfangsfläche des zweiten Rohrstücks einen gewindefreien Abschnitt ausbildet,
- die gewindefreien Abschnitte der beiden Rohrstücke wenigstens partiell aneinander radial anliegen und miteinander zusammenwirken,
- und wenigstens ein gewindefreier Abschnitt eine radial wirkende Dichtung aufweist, welche der Abdichtung des Passungsspiels zwischen den beiden Rohrstücken dient.

Diese Ausführungsform ermöglicht besonders vorteilhaft, dass keinerlei Fluid, wie beispielsweise Gas oder Wasser, aus dem Pass- und Ausbaustück entweicht.

Denkbar ist zudem auch, dass das Pass- und Ausbaustück aus Kunststoff hergestellt ist. Dabei ist insbesondere auch vorgesehen, dass die Rohrstücke mit ihrem Innen und Außengewinde aus Kunststoff hergestellt sind. Besonders vorteilhaft an Kunststoff ist, dass dieser keiner Korrosion unterliegt und somit eine dauerhafte Beständigkeit des Pass- und Ausbaustückes gewährleistet wird. Zudem ist die Herstellung eines Pass- und Ausbaustücks aus Kunststoff für Spezialanwendungen in großen Durchmessern oder Mindermengen kostengünstig möglich. Das Gewinde lässt sich durch spanende Bearbeitung besonders leicht aus dem Kunststoff herausarbeiten.

Weitere Vorteile der Erfindung sowie ein besseres Verständnis derselben ergeben sich aus der nachfolgenden Beschreibung eines Ausführungsbeispiels. Es zeigen:
- Figur 1:: Ein erfindungsgemäßes Pass- und Ausbaustück in Seitenansicht,
- Figur 2:: Schnittdarstellung des Pass- und Ausbaustücks entlang der Schnittlinie II-II gemäß Figur 1.

In den Figuren ist das erfindungsgemäße Pass- und Ausbaustück insgesamt mit der Bezugsziffer 10 versehen.

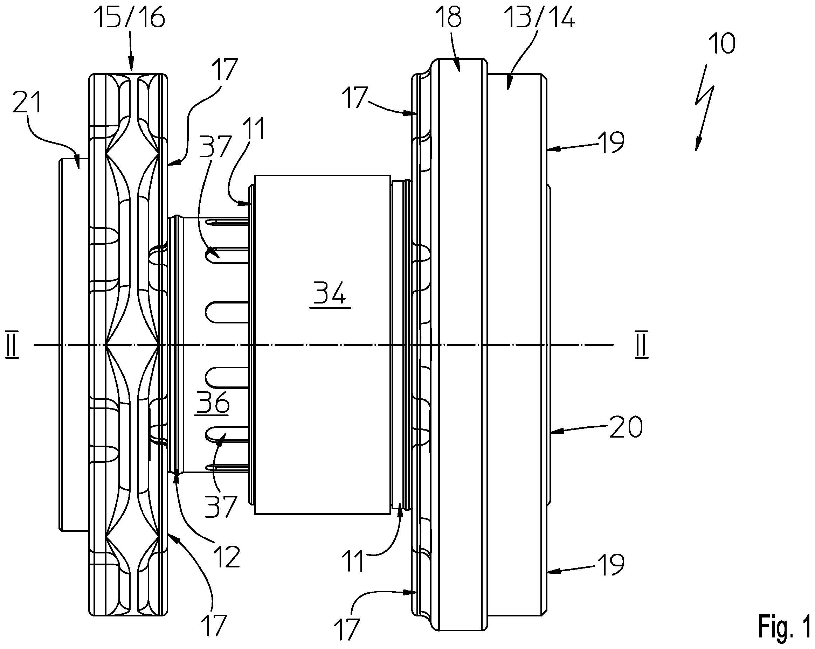

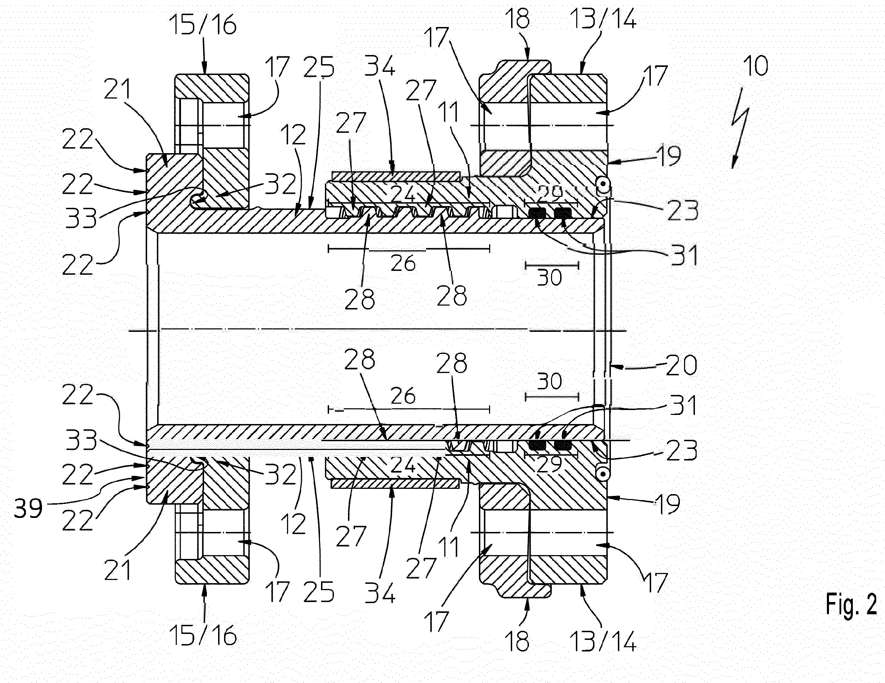

Die Figur 1 zeigt das Pass- und Ausbaustück 10 in Seitenansicht. Die Figur 2 zeigt eine Schnittdarstellung des Pass- und Ausbaustücks 10 entlang der Schnittlinie II-II gemäß Figur 1.

Das Pass- und Ausbaustück 10 umfasst ein erstes Rohrstück 11 und zweites Rohrstück 12.

Das erste Rohrstück 11 weist einen ersten Befestigungsflansch 13 auf, welcher als Festflansch 14 ausgebildet ist. Das zweite Rohrstück 12 weist auf der von dem ersten Rohrstück 11 abgewandten Ende einen zweiten Befestigungsflansch 15 auf, welcher als Losflansch 16 ausgebildet ist. Der Festflansch 14 und der Losflansch 16 weisen jeweils Bohrungen 17 auf, welche der Aufnahme von nicht dargestellten Schraubbolzen dienen, um die Flansche 14 und 16 jeweils an einem Gegenbauteil (nicht dargestellt) festzulegen. Der Losflansch 16 bildet zudem eine Ringwulst 32 aus, welcher mit einer im Späteren erläuterten Kehlnut 33 zusammenwirkt.

Dem Festflansch 14 ist ein vorgespannter Flanschring 18 mit weiteren Bohrungen 17 vorgelagert. Beim Anziehen der Schraubbolzen bringt dieser rohrinnenraumnah Druck auf den Festflansch auf und garantiert somit die Dichtigkeit auch bei hohen Rauminnendrücken. Näheres zu der Funktion des Flanschrings 18 ist der DE 10 2015 104 718 A1 zu entnehmen.

Die Figuren zeigen zudem, dass der Festflansch 14 eine Flanschanlagefläche 19 ausbildet. Diese Flanschanlagefläche 19 trägt ein die Rohrstücköffnung umgebende ringförmige Dichtung 20. Diese Dichtung 20 dient der Abdichtung des ersten Rohrstücks 11 gegenüber dem nicht dargestellten Gegenbauteil.

Gemäß der Figur 2 verfügt das erste Rohrstück 11 über einen Gewindeabschnitt 24 und einen gewindefreien Abschnitt 29. Der Gewindeabschnitt 24 liegt im flanschenfreien Rohrabschnitt. Hierfür bildet eine Innenumfangsfläche 23 aus. Diese Innenumfangsfläche 23 weist ein Innengewinde 24 auf, welches wiederum ein Gewindeprofil 27 ausbildet.

Der gewindefreie Abschnitt 29 liegt im Bereich des Festflansches 14 und ist mit einem radial wirkenden Dichtung 31 versehen, welche der Abdichtung des Passungsspiels von erstem Rohrabschnitt 11 und zweiten Rohrabschnitt 12 dient.

In den Figuren 1 und 2 ist zudem ein Ringbauteil 34 aus PVC dargestellt, welcher das erste Rohrstück 11 am flanschfreien Ende außenseitig umgibt. Dieses Ringbauteil 34 dient der Verstärkung des ersten Rohrstücks 11 und verhindert dessen Aufweitung radial nach außen.

Das zweite Rohrstück 12 ist neben dem Losflansch 16 mit einem Ringbund 21, einem Gewindeabschnitt 26 und einem gewindefreien Abschnitt 30 versehen.

Der Ringbund 21 stellt gegenüber einem weiteren Rohrleitungsbauteil eine Anlagefläche 39 bereit. Zudem weist der Ringbund 21 ringförmige Dichtrillen auf (nur in Figur 2 dargestellt), in welche eine nicht dargestellte Dichtung beim Herstellen einer Flanschverbindung eingepresst wird.

Auf der Anlagefläche 39 abgewandten Seite bildet der Ringbund 21 eine Kehlnut 33 aus. Die Kehlnut 33 kooperiert mit dem Ringwulst 32 des Losflansch 16, um eine Aufweitung der Dichtfläche von der Anlagefläche des Ringbundes 21 und der Dichtfläche des weiteren Bauteils (nicht dargestellt) zu verhindern.

Das zweite Rohrstück 12 verfügt über einen Gewindeabschnitt 26 und einen gewindefreie Abschnitt 30 am flanschfreien Bereich des Rohres. Die Außenumfangsfläche 25 des zweiten Rohrstücks 12 bildet ein Außengewinde 26 aus. Dieses Außengewinde 26 ist mit einem Gewindeprofil 28 versehen. Das Gewindeprofil 28 kooperiert mit dem Gewindeprofil 27 des ersten Rohrstücks 11, welche mit Axialspiel ineinander angeordnet sind. Das Innen-und Außengewinde 24, 26 bilden das Gewinde des Pass- und Ausbaustücks 10.

Letztlich ist der Figur 1 zu entnehmen, dass eine Außenfläche 36 des zweiten Rohrstücks 12 Axialnuten 37 ausbildet. In diese greift ein nicht dargestellter Bandgürtel ein, um das zweite Rohrstück 12 aus dem ersten Rohrstück 11 herauszudrehen.

Die Funktionsweise des Pass- und Ausbaustücks 10 wird im Folgenden erläutert:
Zunächst wird der Festflansch 14 mit seiner Flanschanlagefläche 19 und der ringförmigen Dichtung 20 an einer nicht dargestellten Flanschanlagefläche eines Gegenbauteils, wie beispielsweise einem Rohr, festgelegen. Die Bohrungen 17 des Festflansches 14 und des Flanschringes 18 werden fluchtend aneinander angeordnet. Danach werden in diese Bohrungen 17 nicht dargestellte Schaubbolzen eingefügt und die Schraubbolzen anschließend verschraubt, um das erste Rohrstück 11 an dem nicht dargestellten Gegenbauteil festzulegen.

Danach wird das zweite Rohrstück 12 aus dem ersten Rohrstück 11 herausgedreht und somit das Pass- und Ausbaustück 10 in seiner axialen Länge verändert. Am Ende dieses Vorgangs liegt der Ringbund 21 an einem der Flanschanlagefläche des Gegenbauteils zugeordneten Dichtelement (nicht dargestellt) an.

In dieser definierten Gewindestellung würde ein weiteres Herausdrehen des zweiten Rohstücks 12 aus dem ersten Rohrstück 11 unerwünschte Reibkräfte auf das Dichtelement aufbringen. Um dies zu vermeiden, ist das Axialspiel im Gewinde vorgesehen. Zunächst werden nun die Bohrungen 17 des Losflansches 16 fluchtend an dem nicht dargestellten Gegenbauteils ausgerichtet und in die Bohrungen 17 nicht dargestellte Schraubbolzen eingefügt. Beim Anziehen der Schraubbolzen erlaubt das Axialspiel das Überbrücken der Restdistanz zwischen den Flanschen von Pass- und Ausbaustück 10 und Gegenbauteil.

### Bezugszeichenliste:

- 10: Pass- und Ausbaustück
- 11: erstes Rohrstück
- 12: zweites Rohrstück
- 13: erster Befestigungsflansch
- 14: Festflansch
- 15: zweiter Befestigungsflansch
- 16: Losflansch
- 17: Bohrung
- 18: Flanschring
- 19: Flanschanlagefläche
- 20: Dichtung
- 21: Ringbund
- 22: Dichtrillen
- 23: Innenumfangsfläche von 11
- 24: Innengewinde
- 25: Außenumfangsfläche von 12
- 26: Außengewinde
- 27: Gewindeprofil von 24
- 28: Gewindeprofil von 26
- 29: gewindefreier Abschnitt von 11
- 30: gewindefreier Abschnitt von 12
- 31: Dichtung
- 32: Ringwulst
- 33: Kehlnut
- 34: Ringbauteil
- 36: Außenfläche von 12
- 37: Axialnuten
- 39: Anlagefläche von 21

## Patentansprüche

1. Pass- und Ausbaustück (10) für Rohrleitungen mit einem ersten Rohrstück (11) und einem zweiten Rohrstück (12), wobei das zweite Rohrstück (12) in dem ersten Rohrstück (11) axial verschieblich angeordnet ist, um eine axiale Längenänderung des Pass- und Ausbaustückes (10) zu ermöglichen, und wobei das erste und das zweite Rohrstück (11, 12) an ihren voneinander abgewandten Enden je eine Befestigungseinrichtung aufweisen, wobei die Befestigungseinrichtung des ersten Rohrstücks als Befestigungsflansch (13, 14) und/oder als Rohrspitzende ausgebildet ist, und wobei die Befestigungseinrichtung des zweiten Rohrstücks als Befestigungsflansch (15) ausgebildet ist; wobei das erste Rohrstück (11) auf einer Innenumfangsfläche (23) ein Innengewinde (24) und das zweite Rohrstück (12) auf einer Außenumfangsfläche (25) ein Außengewinde (26) ausbildet, wobei die Gewinde (24, 26) miteinander zusammenwirken, um durch eine relative Drehung beider Rohrstücke (11, 12) zueinander die axiale Länge des Pass- und Ausbaustückes (10) zu verändern, **dadurch gekennzeichnet, dass** das Gewinde des Pass- und Ausbaustücks (10) ein Axialspiel aufweist und in einer definierten Gewindestellung eine axiale Verlagerung von dem ersten und dem zweiten Rohrstück (11, 12) gewährleistet und dass das Maß des Axialspiels wenigstens einer abdichtenden Stauchung eines Dichtelements zwischen der als Befestigungsflansch (15) ausgebildeten Befestigungseinrichtung des zweiten Rohrstücks (12) und einer Flanschanlagefläche eines weiteren Bauteils, wie Armatur oder Rohr, entspricht.

2. Pass- und Ausbaustück (10) nach einem der vorhergehenden Ansprüche, **dadurch gekennzeichnet, dass** die Befestigungseinrichtung des einen Rohrstücks (11) als Festflansch (14) und die Befestigungseinrichtung des anderen Rohrstücks (12) als Losflansch (16) ausgebildet ist.

3. Pass- und Ausbaustück (10) nach einem der vorhergehenden Ansprüche, **dadurch gekennzeichnet, dass**
- die Innenumfangsfläche (23) des ersten Rohstücks (11) einen gewindefreien Abschnitt (11) aufweist,
- die Außenumfangsfläche (25) des zweiten Rohrstücks (12) einen gewindefreien Abschnitt (30) ausbildet,
- die gewindefreien Abschnitte (29, 30) der beiden Rohrstücke (11, 12) wenigstens partiell aneinander radial anliegen und miteinander zusammenwirken,
- und wenigstens ein gewindefreier Abschnitt (29) eine radial wirkende Dichtung aufweist, welche der Abdichtung des Passungsspiels zwischen den beiden Rohrstücken (11, 12) dient.

4. Pass- und Ausbaustück (10) nach einem der vorhergehenden Ansprüche, **dadurch gekennzeichnet, dass** das Pass- und Ausbaustück (10) aus Kunststoff hergestellt ist.

## Claims

1. Dismantling joint (10) for pipelines having a first pipe piece (11) and a second pipe piece (12), the second pipe piece (12) being disposed so as to be axially slidable in the first pipe piece (11) to enable an axial length adjustment of the dismantling joint (10), and the first and second pipe piece (11, 12) each have a fixing device at their mutually remote ends, the fixing device of the first pipe piece being provided in the form of a fixing flange (13, 14) and/or as a pipe end and the fixing device of the second pipe piece being provided in the form of a fixing flange (15); and the first pipe piece (11) forms an internal thread (24) on an internal circumferential surface (23) and the second pipe piece (12) forms an external thread (26) on an external circumferential surface (25), and the threads (24, 26) co-operate with one another in order to adjust the axial length of the dismantling joint (10) by means of a rotation of the two pipe pieces (11, 12) relative to one another, **characterised in that** the thread of the dismantling joint (10) has an axial play and ensures an axial displacement of the first and second pipe piece (11, 12) in a defined thread position and the amount of axial play corresponds at least to a sealing compression of a seal element between the fixing device of the second pipe piece (12) provided in the form of a fixing flange (15) and a flange contact surface of another component, such as a fitting or pipe.

2. Dismantling joint (10) as claimed in one of the preceding claims, **characterised in that** the fixing device of one pipe piece (11) is provided in the form of a fixed flange (14) and the fixing device of the other pipe piece (12) is provided in the form of a loose flange (16).

3. Dismantling joint (10) as claimed in one of the preceding claims, **characterised in that**
- the internal circumferential surface (23) of the first pipe piece (11) has a non-threaded portion (30),
- the external circumferential surface (25) of the second pipe piece (12) forms a non-threaded portion (30),
- the non-threaded portions (29, 30) of the two pipe pieces (11, 12) lie at least partially radially against one another and co-operate with one another,
- and at least one non-threaded portion (29) has a radially acting seal which is used to seal the play in the fit between the two pipe pieces (11, 12).

4. Dismantling joint (10) as claimed in one of the preceding claims, **characterised in that** the dismantling joint (10) is made from plastic.

## Revendications

1. Ensemble de raccord et d'extension (10) de conduits de tuyauterie avec un premier morceau de tuyau (11) et un deuxième morceau de tuyau (12), où le deuxième morceau de tuyau (12) est disposé de manière à être enfoncé axialement dans le premier morceau de tuyau (11), pour permettre un prolongement de l'ensemble de raccord et d'extension (10), et où le premier et le deuxième morceau de tuyaux (11, 12) présentent respectivement un moyen de fixation sur leurs extrémités éloignées, où le moyen de fixation du premier morceau de tuyau a la forme d'une bride de fixation (13, 14) et/ou d'une extrémité supérieure du tuyau, et où le moyen de fixation du deuxième morceau de tuyau a la forme d'une bride de fixation (15) ;
Où le premier morceau de tuyau (11) forme un taraudage (24) sur une surface intérieure (23) périphérique et le deuxième morceau de tuyau (12) forme un filetage (26) sur une surface extérieure périphérique (25), où le taraudage (24) et le filetage (26) coopèrent pour modifier la longueur axiale de l'ensemble de raccord et d'extension (10) grâce à une rotation relative des deux morceaux de tuyaux (11, 12) l'un par rapport à l'autre, **caractérisé en ce que** le vissage de l'ensemble de raccord et d'extension (10) présente un jeu axial et garantit, à un point défini du vissage, un transfert axial du premier et du deuxième morceaux de tuyau (11, 12) et **en ce que** la mesure du jeu axial correspond au moins à l'écrasement d'étanchéité d'un élément d'étanchéité entre le moyen de fixation de la forme d'une bride de fixation (15) du deuxième morceau de tuyau (12) et une surface de contact d'une bride d'une pièce supplémentaire, comme une armature ou un tuyau.

2. Ensemble de raccord et d'extension (10) d'après l'une des revendications précédentes, **caractérisé en ce que** le moyen de fixation de l'un des morceaux de tuyaux (11) a la forme d'une bride de fixation (14) et le moyen de fixation de l'autre des morceaux de tuyau (12) a la forme d'une bride de relâchement (16).

3. Ensemble de raccord et d'extension (10) d'après l'une des revendications précédentes, **caractérisé en ce que**
- La surface intérieure périphérique (23) du premier morceau de tuyau (11) présente un segment (30) sans taraudage,
- La surface extérieure périphérique (25) du deuxième morceau de tuyau (12) présente un segment (30) sans filetage,
- Le segment non fileté resp. taraudé des pièces respectives (29, 30) des deux morceaux de tuyaux respectifs (11, 12) se touchent au moins partiellement de manière radiale et coopèrent l'une avec l'autre,
- Et au moins un segment sans taraudage (29) réalise une étanchéité radiale qui sert à l'étanchéité du jeu de raccord entre les deux morceaux de tuyaux (11, 12).

4. Ensemble de raccord et d'extension (10) d'après l'une des revendications précédentes, **caractérisé en ce que** l'ensemble de raccord et d'extension (10) est fabriqué dans un matériau synthétique.
